# EUROPEAN PATENT APPLICATION

(11) **EP 4 576 392 A1**
(43) Date of publication of application: **25.06.2025**
(21) Application number: 23889179.0
(22) Date of filing: 09.11.2023
(51) Int. Cl.: H01M 50/451, H01M 50/446, H01M 50/443, H01M 50/426, H01M 50/403

(54) **SEPARATOR, SECONDARY BATTERY COMPRISING SAME, AND METHOD FOR PREPARING SECONDARY BATTERY**

(30) Priority: 09.11.2022 KR 20220148632
(71) Applicant: LG Energy Solution, Ltd., Seoul 07335 (KR)
(72) Inventor: BAE, Dong-Hun, Daejeon 34122 (KR); KIM, Ji-Eun, Daejeon 34122 (KR); SHIN, Hwan-Ho, Daejeon 34122 (KR)
(74) Representative: Hoffmann Eitle
(86) International application number: PCT/KR2023/017988
(87) International publication number: WO 2024/101922

(57) **Abstract**

The present disclosure relates to a separator, a secondary battery comprising the same and a method for manufacturing the same, and the separator has a porous coating layer including two types of binder polymers in different regions of the porous coating layer, wherein the binder polymers dissolve in an electrolyte solution at different temperatures, to form lithium ion paths in the separator, thereby achieving high ionic conductivity and meeting resistance and stability requirements for the secondary battery.

## Description

### TECHNICAL FIELD

The present disclosure relates to a separator, a secondary battery comprising the same and a method for manufacturing the secondary battery. More particularly, the present disclosure relates to a separator that has high ionic conductivity and meets resistance and stability requirements for secondary batteries, a secondary battery comprising the same and a method for manufacturing the secondary battery.

The present application claims priority to Korean Patent Application No. 10-2022-0148632 filed in the Republic of Korea on November 9, 2022, the disclosure of which is incorporated herein by reference.

### BACKGROUND ART

Recently, attention is paid to safety of electrochemical devices in the industrial field. In particular, a secondary battery including a lithium secondary battery has an electrode assembly including a positive electrode, a negative electrode and a separator, and the electrode assembly may be made with a structure in which the separator is interposed between the positive electrode and the negative electrode.

The separator used in the secondary battery has a porous coating layer including inorganic particles and a binder on at least one surface of a porous substrate to ensure heat resistance and safety.

The binder used to manufacture the separator plays a role in connecting and holding the inorganic particles together and adhering the separator to the electrode. However, the binder is not only coated on the surface of the porous substrate but also permeates into the pores of the porous substrate, which inhibits the ion passage function of the separator, resulting in high resistance of the secondary battery.

Besides, when the binder content is low or the binder easily dissolves in an electrolyte solution, and the separator may be separated from the electrode due to low adhesive strength, or the binder in the porous coating layer does not bind the inorganic particles, resulting in low stability. Additionally, to increase the adhesive strength, as the binder content increases, ionic conductivity decreases.

### SUMMARY

### Technical Problem

The present disclosure is designed to solve the above-described problem, and therefore the present disclosure is directed to providing a separator having paths for ion movement in the separator to achieve high ionic conductivity, low resistance and high stability, a secondary battery comprising the same and a method for manufacturing the secondary battery.

### Technical Solution

The inventors discovered that the above-described problem may be solved through a separator, a secondary battery and a method for manufacturing the same as described below.

According to a first embodiment, the present disclosure relates to the separator including a porous substrate having pores; and a porous coating layer located on at least one surface of the porous substrate, the porous coating layer including inorganic particles and a binder polymer located on all or part of surfaces of the inorganic particles and connecting and holding the inorganic particles together, wherein the binder polymer includes a first binder polymer and a second binder polymer, the first binder polymer is a polymer that dissolves in the electrolyte solution when it is wet with an electrolyte solution at 65 to 75°C for 3 to 5 minutes, the second binder polymer is a polymer that does not dissolve in the electrolyte solution when it is wet with the electrolyte solution at 65 to 75°C for 3 to 5 minutes, the porous coating layer includes a first porous coating layer zone and a second porous coating layer zone, at least part of the first porous coating layer zone is exposed to a surface region of the porous coating layer, the first porous coating layer zone only includes the first binder polymer as the binder polymer, and the second porous coating layer zone only includes the second binder polymer as the binder polymer.

According to a second embodiment, in the first embodiment, the present disclosure relates to the separator wherein the first porous coating layer zone includes two or more zones spaced apart from each other.

According to a third embodiment, in the first or second embodiment, the present disclosure relates to the separator wherein at least part of the second porous coating layer zone is defined by the first porous coating layer zone.

According to a fourth embodiment, in any one of the first to third embodiments, the present disclosure relates to the separator wherein the first binder polymer includes poly(vinylidene fluoride-hexafluoropropylene) (PVdF-HFP), and the second binder polymer includes poly(vinylidenefluoride-tetrafluoroethylene) (PVdF-TFE).

According to a fifth embodiment, in any one of the first to fourth embodiments, the present disclosure relates to the separator wherein a weight average molecular weight of the first binder polymer is 300,000 to 600,000.

According to a sixth embodiment, in any one of the first to fifth embodiments, the present disclosure relates to the separator wherein a weight average molecular weight of the second binder polymer is 300,000 to 400,000.

According to a seventh embodiment, in any one of the first to sixth embodiments, the present disclosure relates to the separator wherein the first binder polymer is a PVdF-HFP copolymer having a substitution ratio of HFP of 5 to 20 wt%, and the second binder polymer is a PVdF-TFE copolymer having a substitution ratio of TFE of 15 to 25 wt%.

According to an eighth embodiment, the present disclosure relates to the secondary battery including a positive electrode, a negative electrode and the separator according to any one of the first to seventh embodiments between the positive electrode and the negative electrode.

According to a ninth embodiment, in the eighth embodiment, the present disclosure relates to the secondary battery wherein the first porous coating layer zone has one or more grooves having a predetermined width and depth.

According to a tenth embodiment, in the ninth embodiment, the present disclosure relates to the secondary battery wherein an area of the grooves is 20 to 30% of a total area of the surface of the porous coating layer based on the area occupied by the grooves on the surface of the porous coating layer.

According to an eleventh embodiment, in the ninth or tenth embodiment, the present disclosure relates to the secondary battery wherein a depth of the grooves is from 0.5 to 1 µm.

According to a twelfth embodiment, in any one of the ninth to eleventh embodiments, the present disclosure relates to the secondary battery wherein the grooves are arranged at regular or irregular intervals.

According to a thirteenth embodiment, the present disclosure relates to the method for manufacturing the secondary battery having lithium ion paths, including: preparing a first slurry including inorganic particles, a first binder polymer and a solvent, and a second slurry including inorganic particles, a second binder polymer and a solvent; coating the first slurry and the second slurry on at least one surface of a porous substrate having pores to prepare a separator having a porous coating layer, wherein the porous coating layer has a first porous coating layer zone only including the first binder polymer as the binder polymer and a second porous coating layer zone only including the second binder polymer as the binder polymer; interposing the separator between a positive electrode and a negative electrode to prepare an electrode assembly, and placing the electrode assembly in an electrode case and injecting an electrolyte solution to prepare a preliminary secondary battery; and placing the preliminary secondary battery between two jig plates and performing pressure and heat pre-treatment to apply heat of 65 to 75°C to the secondary battery for 3 to 5 minutes using the jig plates, wherein at least part of the first binder polymer included in the first porous coating layer zone dissolves in the electrolyte solution to form one or more grooves having a predetermined width and depth in a surface of the porous coating layer during the pressure and heat pre-treatment.

According to a fourteenth embodiment, in the thirteenth embodiment, the present disclosure relates to the method for manufacturing the secondary battery having the lithium ion paths wherein the coating of the first slurry and the second slurry on the at least one surface of the porous substrate includes (1) coating the first slurry and the second slurry on the porous substrate in an alternating manner, or (2) coating the second slurry on the porous substrate to a predetermined thickness, and coating the first slurry and the second slurry on the coated second slurry in an alternating manner, or (3) coating the second slurry on the porous substrate to a predetermined thickness, and coating the first slurry on the coated second slurry with a gap therebetween into a predetermined shape.

According to a fifteenth embodiment, in the thirteenth or fourteenth embodiment, the present disclosure relates to the method for manufacturing the secondary battery having the lithium ion paths wherein the first binder polymer includes PVdF-HFP, and the second binder polymer includes PVdF-TFE.

According to a sixteenth embodiment, in any one of the thirteenth to fifteenth embodiments, the present disclosure relates to the method for manufacturing the secondary battery having the lithium ion paths wherein a weight average molecular weight of the first binder polymer is 300,000 to 600,000.

According to a seventeenth embodiment, in any one of the thirteenth to sixteenth embodiments, the present disclosure relates to the method for manufacturing the secondary battery having the lithium ion paths wherein a weight average molecular weight of the second binder polymer is 300,000 to 400,000.

According to an eighteenth embodiment, in any one of the thirteenth to seventeenth embodiments, the present disclosure relates to the method for manufacturing the secondary battery having the lithium ion paths wherein the first binder polymer is a PVdF-HFP copolymer having a substitution ratio of HFP of 5 to 20 wt%, and the second binder polymer is a PVdF-TFE copolymer having a substitution ratio of TFE of 15 to 25 wt%.

According to a nineteenth embodiment, in any one of the thirteenth to eighteenth embodiments, the present disclosure relates to the method for manufacturing the secondary battery having the lithium ion paths wherein an area of the grooves is 20 to 30% of a total area of the surface of the porous coating layer based on the area occupied by the grooves on the surface of the porous coating layer.

According to a twentieth embodiment, in any one of the thirteenth to nineteenth embodiments, the present disclosure relates to the method for manufacturing the secondary battery having the lithium ion paths wherein a depth of the grooves is from 0.5 to 1 µm.

### Advantageous Effects

According to the present disclosure, the porous coating layer includes two types of binder polymers at different zones, wherein the binder polymers dissolve in an electrolyte solution at different temperatures, thereby providing the separator having lithium ion paths.

Additionally, according to the present disclosure, only one of the two different types of binder polymers included in the porous coating layer of the separator dissolves in the electrolyte solution by heating under predefined conditions in the secondary battery manufacturing process to form grooves in the porous coating layer of the separator. The grooves in the porous coating layer are used as paths for ion movement in the separator, thereby providing the secondary battery that achieves high ionic conductivity, low resistance and high air permeability and its manufacturing method.

### BRIEF DESCRIPTION OF THE DRAWINGS

The accompanying drawings illustrate exemplary embodiments of the present disclosure and together with the foregoing detailed description, serve to provide a further understanding of the technical aspect of the present disclosure, and thus the present disclosure should not be construed as being limited to the drawings.
FIG. 1 is a schematic cross-sectional view of a porous coating layer according to an embodiment of the present disclosure.
FIG. 2 is a schematic cross-sectional view of a porous coating layer according to another embodiment of the present disclosure.
FIG. 3 is a top view of separators of different patterns according to different embodiments of the present disclosure.
FIGs. 4 to 6 are top views of separators prepared in Examples 1 to 3.

### DETAILED DESCRIPTION

Hereinafter, the present disclosure will be described in detail. Prior to the description, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time the application was filed.

The term "comprise" or "include" when used in the present disclosure, specifies the presence of stated elements, but does not preclude the presence or addition of one or more other elements, unless the context clearly indicates otherwise.

Throughout the present disclosure, 'A and/or B' refers to either A or B or both.

A secondary battery according to an aspect of the present disclosure includes:
a positive electrode, a negative electrode and a separator between the positive electrode and the negative electrode,
wherein the separator includes:
   a porous substrate having pores; and
   a porous coating layer located on at least one surface of the porous substrate, the porous coating layer including inorganic particles and a binder polymer located on all or part of the surfaces of the inorganic particles to connect and hold the inorganic particles together,
   wherein the binder polymer includes a first binder polymer and a second binder polymer,
   wherein the first binder polymer is a polymer that dissolves in an electrolyte solution when it is wet with the electrolyte solution at 65 to 75°C for 3 to 5 minutes,
   wherein the second binder polymer is a polymer that does not dissolve in the electrolyte solution when it is wet with the electrolyte solution at 65 to 75°C for 3 to 5 minutes,
   wherein the porous coating layer includes a first porous coating layer zone and a second porous coating layer zone,
   wherein at least part of the first porous coating layer zone is exposed to a surface region of the porous coating layer, and
   wherein the first porous coating layer zone only includes the first binder polymer as the binder polymer, and the second porous coating layer zone only includes the second binder polymer as the binder polymer.

The porous substrate used in the separator of the present disclosure may include any flat porous substrate commonly used in secondary batteries, for example, porous membranes or nonwoven fabrics made of various types of polymers. For example, the porous substrate may include polyolefin-based porous membranes used as separators of secondary batteries, in particular, lithium secondary batteries or non-woven fabrics made of polyethyleneterephthalate fibers, and its material or shape may be variously selected depending on the purpose. For example, the polyolefin-based porous membrane may be formed from at least one polyolefin-based polymer selected from the group consisting of polyethylene such as high density polyethylene, linear low density polyethylene, low density polyethylene, ultrahigh molecular weight polyethylene; polypropylene; polybutylene; and polypentene, and the non-woven fabric may be made from fibers using polyolefin-based polymers or polymers having higher heat resistance.

The porous substrate may have a thickness in a range between 1 µm and 30 µm. For example, the thickness of the porous substrate may be in a range between 1 µm and 20 µm or between 5 µm and 20 µm. When the thickness of the porous substrate satisfies the above-described range, it is easy to maintain the mechanical properties, and it may be possible to prevent increases in battery resistance.

The porosity of the porous substrate may be in a range between 30% and 75%. For example, the porosity of the porous substrate may be in a range between 35% and 65%. When the porosity satisfies the above-described range, it may be possible to prevent increases in battery resistance and maintain mechanical properties of the porous substrate.

The pore size of the porous substrate may be in a range between 0.01 µm and 5.0 µm. For example, the pore size of the porous substrate may be in a range between 0.1 µm and 1.0 µm. When the pore size satisfies the above-described range, it may be possible to prevent the increased battery resistance due to the closed pore structure and maintain self-discharge characteristics of secondary batteries.

The binder polymer includes the first binder polymer and the second binder polymer.

Additionally, the first binder polymer and the second binder polymer are selected from polymers that provide bonding between the inorganic particles and bonding between the inorganic particles and the porous substrate layer, and the first binder polymer and the second binder polymer dissolve in the electrolyte solution at different temperatures.

According to an embodiment of the present disclosure, the first binder polymer is a polymer that dissolves in the electrolyte solution when it is wet with the electrolyte solution at 65 to 75°C for 3 to 5 minutes, and the second binder polymer is a polymer that does not dissolve in the electrolyte solution when it is wet with the electrolyte solution at 65 to 75°C for 3 to 5 minutes.

That is, the temperature at which the first binder polymer dissolves in the electrolyte solution and the temperature at which the second binder polymer dissolves in the electrolyte solution do not overlap. Accordingly, when thermal treatment is performed at 65 to 75°C for 3 to 5 minutes, at least part of the first binder polymer dissolves in the electrolyte solution, thereby providing wet adhesive strength and movement paths of lithium ions. Specifically, the porous coating layer part in which the first binder polymer is dissolved may have the pores, and when the porous coating layer part in which the first binder polymer is dissolved is exposed to the surface region of the porous coating layer, the pores may form grooves that act as paths for the movement of lithium ions, and the second binder polymer does not dissolve and may provide wet adhesive strength and keep the cell rigid. Accordingly, when the separator is applied to the secondary battery, conduction of lithium ions may increase, resulting in low resistance and high air permeability.

In this instance, according to an embodiment of the present disclosure, the solubility of the first binder polymer and the second binder polymer in the electrolyte solution may be determined in a way that each binder polymer is wet with the electrolyte solution and stored at 70°C for 5 minutes, and when a weight percent of binder polymer dissolved is equal to or more than 10 wt% based on the total weight of the binder polymer, it is determined that the binder polymer dissolved, and when the weight percent of binder polymer dissolved is less than 10 wt% based on the total weight of the binder polymer, it is determined that the binder polymer did not dissolve. In this instance, the electrolyte solution may include any electrolyte solution including an organic solvent, a lithium salt and/or an additive, commonly used in the art, and any electrolyte solution including the lithium salt and the additive in an amount of 5 wt% or less based on 100 wt% of the organic solvent. For example, the electrolyte solution may include 1.0M of LiPF₆ in a mixed organic solvent of ethylene carbonate (EC) and ethylmethyl carbonate (EMC) at 3:7 (volume ratio) with an addition of 0.5 wt% of vinylene carbonate (VC) as an additive.

The electrolyte solution includes the salt that dissolves or gets dissociated in the organic solvent, the salt having a structure of A⁺B⁻, wherein A⁺ is an alkali metal cation such as Li⁺, Na⁺, K⁺ or a combination thereof and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone or a mixture thereof, but is not limited thereto. Additionally, the additive may include vinylene carbonate (VC), catechol carbonate (CC), biphenyl, cyclohexylbenzene, propane sultone (PS), ethylene sulfate (ESA), etc.

Additionally, the salt may appropriately vary within the commonly available range, and may be included in the electrolyte solution at the concentration of 0.5M to 2M, specifically 0.9M to 1.5M. For example, the salt may include a lithium salt.

In the present disclosure, the electrolyte solution preferably includes the lithium salt and the additive in an amount of 5 wt% or less based on 100 wt% of the organic solvent in terms of the solubility of the first binder polymer and the second binder polymer.

According to an embodiment of the present disclosure, the first binder polymer may include poly(vinylidene fluoride)-hexafluoropropylene (PVdF-HFP).

The second binder polymer may include poly(vinylidenefluoride)-tetrafluoroethylene (PVdF-TFE).

According to an embodiment of the present disclosure, the first binder polymer may be PVdF-HFP, and the second binder polymer may be PVdF-TFE.

According to an embodiment of the present disclosure, the first binder polymer may be a PVdF-HFP copolymer having a substitution ratio of HFP of 5 to 20 wt%, 10 to 15 wt%. When HFP is included in the above-described range, it may be possible to achieve high ionic conductivity and air permeability characteristics when the separator including the same is included in the battery.

According to an embodiment of the present disclosure, the second binder polymer may be a PVdF-TFE copolymer having a substitution ratio of TFE of 15 to 25 wt% or 18 to 23 wt%. When TFE is included in the above-described range, the separator including the same is included in the battery, it may be possible to maintain the bonding between the inorganic particles in the separator and achieve adequate heat resistance and stability.

In this instance, the substitution ratio refers to a percentage (%) of the number of specific repeat units to the total number of repeat units of the polymer.

The first binder polymer may have a weight average molecular weight (M_{w}) in a range between 300,000 and 600,000. Preferably, the weight average molecular weight (M_{w}) of the first binder polymer may be in a range between 350,000 and 500,000. When the weight average molecular weight of the first binder polymer satisfies the above-described range, the first binder polymer may dissolve in the electrolyte solution at 65 to 75°C, and the viscosity of a slurry including the first binder polymer may be controlled, thereby achieving coating and obtaining the uniform coating layer.

The second binder polymer may have a weight average molecular weight (Mw) in a range between 300,000 and 400,000. When the weight average molecular weight of the second binder polymer satisfies the above-described range, the viscosity of a slurry including the second binder polymer may be controlled, thereby achieving coating and obtaining the uniform coating layer.

In an embodiment of the present disclosure, the inorganic particles may include, without limitation, any type of inorganic particle that is electrochemically stable. That is, the inorganic particles that may be used in the present disclosure may include, without limitation, any inorganic particle that do not cause oxidation and/or reduction reaction in the operating voltage range (*e.g.,* 0 to 5V vs Li/Li⁺) of the battery used. Non-limiting examples of the inorganic particles may include inorganic particles having an average particle size in a range between 0.001 to 3 µm or 0.001 and 2 µm. When the average particle size of the inorganic particles satisfies the above-described range, it may be possible to improve dispersion and prevent the coating layer from increasing too much. In this instance, the average particle size of the inorganic particles refers to a particle size (D50) at 50% of the cumulative distribution from the smallest particle size calculated based on a result of measuring particle size distribution of particles after sieving using a particle size distribution analyzer commonly used in the art.

Non-limiting examples of the inorganic particles may include Al₂O₃, AlOOH, Al(OH)₃, AlN, BN, MgO, Mg(OH)₂, SiO₂, ZnO, TiO₂, BaTiO₃ or a mixture thereof.

The amount of the inorganic particles in the porous coating layer may be in a range between 50 wt% and 90 wt%, or 50 wt% and 80 wt% based on 100 wt% of the porous coating layer.

According to an embodiment of the present disclosure, the porous coating layer may include the inorganic particles and the binder polymer to bind the inorganic particles together (i.e., the binder connecting and holding the inorganic particles together) to keep them bonded together, and the inorganic particles and the porous substrate may be bonded together by the binder.

In an embodiment of the present disclosure, the average pore size of the porous coating layer is 10 nm to 900 nm, or 20 nm to 100 nm. The pore size may be calculated from shape analysis through scanning electron microscopy (SEM) images, and the pore size may be calculated using a closed curve formed by intersecting binder threads as the pore shape. In an embodiment of the present disclosure, the pore size of the porous coating layer may be measured by Capillary flow porometry. The Capillary flow porometry is a method that measures the diameter of the smallest pore in the thickness direction. Accordingly, to measure the pore size of the porous coating layer by capillary flow porometry, the porous coating layer is separated from the porous substrate, and to support the separated porous coating layer, the porous coating layer is covered with a non-woven fabric, and in this state, the pore size is measured, and in this instance, the pore size of the non-woven fabric should be much larger than the pore size of the coating layer. In an embodiment of the present disclosure, the porosity of the porous coating layer is preferably 50% to 85%. When the porosity is 85% or less, it may be possible to ensure mechanical properties enough to withstand a press process for adhering to the electrode and ensure the adhesive strength because the surface void ratio is not too high. On the other hand, when the porosity is equal to or more than 50%, it is higher than the porosity of a majority of the porous substrate, and this has a beneficial effect on ionic permeability.

In this instance, in an embodiment of the present disclosure, the porosity may be measured using BEL JAPAN's BELSORP (BET machine) using adsorbate gases, for example, nitrogen, or methods such as mercury intrusion porosimetry, capillary flow prosimetry, etc. Alternatively, in an embodiment of the present disclosure, the true density of the electrode active material layer may be calculated from the density (apparent density) of the obtained electrode (electrode active material layer) and the composition ratios of materials included in the electrode (electrode active material layer) and the density of each component, and the porosity of the electrode active material layer may be calculated from a difference between the apparent density and the true density.

The thickness of the porous coating layer is preferably 0.5 µm to 5 µm on one surface of the porous substrate. The thickness may be 0.5 µm or more, and preferably 1 µm or more, and when the thickness is within the above-described range, the adhesive strength with the electrode is high, and as a result, the cell strength of the battery increases. In contrast, when the thickness is 5 µm or less, it is advantageous in terms of the cycle characteristics and resistance characteristics of the battery. From this perspective, the thickness is preferably 4 µm or less and more preferably 3 µm or less.

In an embodiment of the present disclosure, the porous coating layer includes the first porous coating layer zone and the second porous coating layer zone, and the first porous coating layer zone only includes the first binder polymer as the binder polymer and the second porous coating layer zone only includes the second binder polymer as the binder polymer.

In the present disclosure, the porous coating layer may include another zone other than the first porous coating layer zone and the second porous coating layer zone, and the porous coating layer may consist of the first porous coating layer zone and the second porous coating layer zone. However, provided that the porous coating layer is divided into at least two zones and the zones includes different binder polymers, the present disclosure may further include a plurality of zones and the porous coating layer is not limited to the present disclosure.

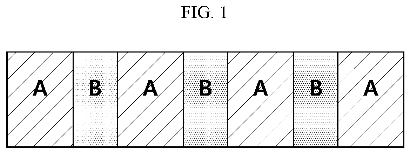

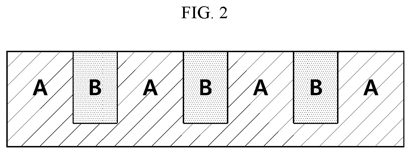

For example, referring to FIGs. 1 and 2, the first porous coating layer zone (B zone in FIG. 1) may include at least two zones spaced apart from each other, and at least part of the second porous coating layer zone may be defined by the first porous coating layer zone (B zone in FIG. 1).

In an embodiment of the present disclosure, at least part of the first porous coating layer zone is exposed to the surface region of the porous coating layer. In the present disclosure, the surface region of the porous coating layer is at least one surface of the porous coating layer that does not contact the porous substrate. The first porous coating layer zone may have one or more predetermined grooves by the exposure of at least part of the first porous coating layer zone to the surface region of the porous coating layer.

In an embodiment of the present disclosure, the porous coating layer has one or more grooves having a predetermined width and depth in the surface thereof.

The grooves are formed at a pressure and heat pre-treatment step of a method for manufacturing a secondary battery as described below, and specifically, at the pressure and heat pre-treatment step, at least part of the first binder polymer included in the first porous coating layer zone dissolves in the electrolyte solution to form one or more grooves. That is, the shape of the grooves may conform to the shape of the first porous coating layer zone.

In this instance, the width of the grooves may be a measured length of a cross section based on the surface of the porous coating layer, and the depth of the grooves may be a measured vertical distance to the bottom of the grooves based on the surface of the porous coating layer.

In an embodiment of the present disclosure, the area of the grooves on the surface of the porous coating layer may be 20 to 30% of the total area of the surface of the porous coating layer based on the area occupied by the grooves on the surface of the porous coating layer.

Additionally, the grooves may be 0.5 to 1 µm in depth, and 10 to 30 mm in width. In this instance, the depth of the grooves may be the average depth of grooves present in the surface of the porous coating layer. For example, the depth of the grooves may be indicated on the basis of the average depth of at least ten grooves.

Additionally, the width of the grooves may be a measured length of a cross section based on the surface of the porous coating layer. Specifically, for example, when the grooves are in a stripe shape, the width of the grooves may be the width of the stripes, and when the grooves are in a dot shape, the width of the groove may be the average diameter of at least ten grooves. When the area, depth and width of the grooves are within the above-described ranges, it may be possible to ensure heat resistance of the porous coating layer, prevent the porous coating layer from creasing due to a thickness difference, and improve the permeation of the electrolyte solution.

In an embodiment of the present disclosure, the grooves may be formed at regular or irregular intervals. In the present disclosure, the shape of the grooves is not limited to a particular shape, but the grooves may have a regular or irregular stripe or dot shape.

The secondary battery according to the present disclosure includes the positive electrode, the negative electrode and the separator between the positive electrode and the negative electrode. The electrode that may be applied to the present disclosure may be manufactured such that an electrode active material is bonded to an electrode current collector by any method commonly used in the art but not limited to a particular method.

Of the electrode active material, non-limiting examples of the positive electrode active material may include any positive electrode active material commonly used in positive electrodes of lithium secondary batteries, and preferably, lithium manganese oxide, lithium cobalt oxide, lithium nickel oxide, lithium iron oxide or lithium composite oxide thereof.

Non-limiting examples of the negative electrode active material may include any negative electrode active material commonly used in negative electrodes of lithium secondary batteries, and preferably, lithium intercalation materials such as lithium metals or lithium alloys, carbon, petroleum coke, activated carbon, graphite or other types of carbons.

Non-limiting examples of the positive electrode current collector may include foils made of aluminum, nickel or a combination thereof, and non-limiting examples of the negative electrode current collector may include foils made of copper, gold, nickel or copper alloys or a combination thereof.

A method for manufacturing a secondary battery having lithium ion paths according to an embodiment of the present disclosure includes:
preparing a first slurry including inorganic particles, a first binder polymer and a solvent, and a second slurry including inorganic particles, a second binder polymer and a solvent;
coating the first slurry and the second slurry on at least one surface of a porous substrate having pores to prepare a separator having a porous coating layer, wherein the porous coating layer has a first porous coating layer zone including only the first binder polymer as the binder polymer and a second porous coating layer zone including only the second binder polymer as the binder polymer;
interposing the separator between a positive electrode and a negative electrode to prepare an electrode assembly, placing the electrode assembly in an electrode case, and injecting an electrolyte solution to prepare a preliminary secondary battery; and
placing the preliminary secondary battery between two jig plates and performing pressure and heat pre-treatment to apply heat of 65 to 75°C to the secondary battery for 3 to 5 minutes using the jig plates,
wherein in the pressure and heat pre-treatment step, at least part of the first binder polymer included in the first porous coating layer zone dissolves in the electrolyte solution to form one or more grooves having a predetermined width and depth in the surface of the porous coating layer.

First, the solvent, the inorganic particles and the binder polymer are mixed to prepare a porous coating layer forming slurry. In this instance, with different types of binders, the first slurry including the first binder polymer and the second slurry including the second binder polymer are prepared. For more details of the inorganic particles, the first binder polymer and the second binder polymer, reference is made to the above description.

Preferably, the solvent may include any solvent having a solubility index similar to each of the first binder polymer and the second binder polymer to use and low boiling point. This is to uniformly mix and make it easy to remove the solvent afterwards. Non-limiting examples of available solvents may include at least one selected from the group consisting of acetone, methylethylketone, tetrahydrofuran, methylene chloride, chloroform, dimethylformamide, NMP and cyclohexane.

Subsequently, the first slurry and the second slurry are coated on at least one surface of the flat porous substrate having pores to form the porous coating layer.

In this instance, the porous coating layer has the first porous coating layer zone including only the first binder polymer as the binder polymer and the second porous coating layer zone including only the second binder polymer as the binder polymer.

According to an embodiment of the present disclosure, when coating the first slurry and the second slurry on at least one surface of the porous substrate to form the porous coating layer,
(1) the first slurry and the second slurry may be coated on the porous substrate in an alternating manner,
(2) the second slurry may be first coated on the porous substrate to a predetermined thickness, and then the first slurry and the second slurry may be coated on the coated second slurry in an alternating manner, or
(3) the second slurry may be first coated on the porous substrate to a predetermined thickness, and then the first slurry may be coated on the coated second slurry with a gap between them into a predetermined shape.

The first slurry and the second slurry may be coated on one surface of the porous substrate such that the first porous coating layer zone including only the first binder polymer as the binder polymer and the second porous coating layer zone including only the second binder polymer as the binder polymer are present.

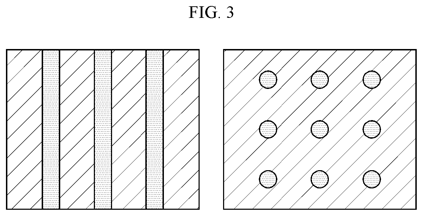

FIGs. 1 to 3 show the porous coating layer including the first porous coating layer zone and the second porous coating layer zone. In FIGs. 1 and 2, the A zone is a region that is coated with the second slurry (including the polymer that includes the second binder polymer and does not dissolve in the electrolyte solution), and the B zone (the polymer that includes the first binder polymer and dissolves in the electrolyte solution) is a region that is coated with the first slurry.

The coating method of the first slurry and the second slurry is not limited to a particular method, and may include any coating method commonly used in the art. For example, the first slurry and/or the second slurry is coated and dried. In this instance, the coating may be performed by coating methods commonly used in the technical field pertaining to the present disclosure, for example, coating methods using a slot die coater, a Mayer bar, a reverse roll coater, a gravure coater, etc., and preferably a slot die coater.

Subsequently, the separator is placed between the positive electrode and the negative electrode to prepare the electrode assembly, the electrode assembly is placed in the electrode case, and the electrolyte solution is injected to prepare the preliminary secondary battery. For more details of the positive electrode, the negative electrode and the electrolyte solution, reference is made to the above description.

Subsequently, the preliminary secondary battery is placed between two jig plates and pressure and heat pre-treatment is performed to apply heat of 65 to 75°C to the secondary battery for 3 to 5 minutes using the jig plates.

In the pressure and heat pre-treatment step, at least part of the first binder polymer included in the first porous coating layer zone dissolves in the electrolyte solution to form one or more grooves having the predetermined width and depth in the surface of the porous coating layer.

In this instance, the pressure applied to the preliminary secondary battery by the jig plates may be 2 to 5 kgf/cm², or 3 to 4 kgf/cm².

As described above, since the first binder polymer is a polymer that dissolves in the electrolyte solution when it is wet with the electrolyte solution at 65 to 75°C for 3 to 5 minutes, the second binder polymer is a polymer that does not dissolve in the electrolyte solution when it is wet with the electrolyte solution at 65 to 75°C for 3 to 5 minutes, only the first binder polymer included in the first porous coating layer zone dissolves in the electrolyte solution at the pressure and heat pre-treatment step.

The first porous coating layer zone in which the first binder polymer is dissolved forms grooves that may be paths for the movement of lithium ions. For more detailed of the grooves, reference is made to the above description.

That is, by the method for manufacturing the secondary battery of the present disclosure, the movement paths of lithium ions on the surface of the porous coating layer may improve the conduction of lithium ions. When the separator having the porous coating layer is applied to the secondary battery, low resistance and high air permeability may be achieved.

Hereinafter, examples will be presented to describe the present disclosure in detail. However, the examples according to the present disclosure may be modified into many different forms, and the scope of the present disclosure should not be interpreted as being limited to the following examples. The examples of the present disclosure are provided to explain the present disclosure to persons having ordinary skill in the technical field pertaining to the present disclosure completely and thoroughly.

### EXAMPLE

### Example 1

### Preparation of separator

PVdF-HFP (a substitution ratio of HFP of 15%, a weight average molecular weight of about 400,000) as a first binder polymer and alumina Al₂O₃ (Nippon Light Metal, LS235) having an average particle size (D50) of 500 nm as inorganic particles were added to NMP as a solvent to prepare a first slurry. In this instance, a weight ratio of the binder polymer to the inorganic particles was 20: 80.

PVdF-TFE (a substitution ratio of TFE of 20%, a weight average molecular weight of about 300,000) as a second binder polymer and alumina Al₂O₃ (Nippon Light Metal, LS235) having an average particle size (D50) of 500 nm as inorganic particles were added to NMP as a solvent to prepare a second slurry. In this instance, a weight ratio of the binder polymer to the inorganic particles was 20: 80.

Subsequently, the first slurry and the second slurry were coated on a 12 µm thick polyethylene porous substrate (porosity 45%) in an alternating manner to a thickness of about 1.5 µm into a shape of a rectangular prism stripe to prepare a final separator.

### Preparation of positive electrode and negative electrode

97 wt% of LiCoO₂, 1.5 wt% of carbon black powder as a conductive material and 1.5 wt% of PVdF (Kureha) were mixed together, and a mixture was added to an N-methyl-2-pyrrolidone solvent and stirred for 30 minutes using a mechanical stirrer to prepare a positive electrode active material slurry. The slurry was coated on a 20 µm thick aluminum current collector to a thickness of about 60 µm using a doctor blade, dried in a 100°C hot air dryer for 0.5 hour, dried again in a vacuum at 120°C for 4 hours and roll pressed to prepare a positive electrode.

96.5 wt% of artificial graphite particles having an average particle size of 16 µm (LC1, Shanshan), 2.3 wt% of styrene-butadiene rubber (SBR) binder (ZEON) and 1.2 wt% of carboxymethylcellulose (CMC, Daicel) were mixed together, and a mixture was added to distilled water and stirred for 60 minutes using a mechanical stirrer to prepare a negative electrode active material slurry. The slurry was coated on a 8 µm thick copper current collector to a thickness of about 60 µm using a doctor blade, dried in a 100°C hot air dryer for 0.5 hour, dried again in a vacuum at 120°C for 4 hours and roll pressed to prepare a negative electrode.

### Preparation of preliminary secondary battery

A separator was interposed between the positive electrode and the negative electrode to make an electrode assembly, the electrode assembly was placed in an electrode case, followed by injection of an organic electrolyte solution containing 1.0M of LiPF₆ in an organic solvent in which ethylene carbonate (EC) and ethylmethyl carbonate (EMC) were mixed at a volume ratio of 3:7) with an addition of 0.5 wt% of vinylene carbonate (VC) additive to prepare a preliminary secondary battery.

### Preparation of secondary battery having lithium ion paths

Pressure and heat pre-treatment was performed by placing the as-prepared preliminary secondary battery between two jig plates and applying the pressure of 3 kgf/cm² and applying heat of 70°C for 4 minutes.

As a result of the pressure and heat pre-treatment, part of the first binder polymer included in the first porous coating layer zone of the separator of the preliminary secondary battery dissolved in the electrolyte solution to form grooves in the surface of the porous coating layer, yielding a secondary battery having lithium ion paths. In this instance, the area of the grooves was about 20% of the total area of the porous coating layer, the length of the grooves (referring to the width of the stripe shape in the TD direction) was in a range between 10 and 30 mm, and the maximum depth of the grooves was in a range between 0.5 and 1 µm.

### Examples 2 and 3

A separator was prepared by the same method as Example 1, except that the second slurry was coated on the porous substrate using a slot die coater, and the first slurry was coated on the coated second slurry with a gap between them into a circular shape. In this instance, the area of the grooves was in a range between about 25 and 30% of the total area of the porous coating layer, the length of the grooves (referring to the diameter of the circular shape) was in a range between 20 and 30 mm, and the depth of the grooves was in a range between 0.5 and 1 µm.

### Comparative Example 1

A separator was prepared by the same method as Example 1, except that only the first slurry was coated on the porous substrate.

### Comparative Example 2

A separator was prepared by the same method as Example 1, except that only the second slurry was coated on the porous substrate.

### Comparative Example 3

A slurry was coated on a porous substrate to prepare a separator, the slurry prepared by mixing PVdF-HFP (a substitution ratio of HFP of 15%, a weight average molecular weight of about 400,000), PVdF-TFE (a substitution ratio of TFE of 20%, a weight average molecular weight of about 300,000) and inorganic particles in NMP as a solvent. In this instance, a weight ratio of PVDF-HFP: PVDF-TFE: inorganic particles was 10: 10: 80.

### Evaluation example

### Determination of solubility of binder polymer in electrolyte solution

The solubility of the binder polymer in the electrolyte solution was determined by immersing each binder polymer in the electrolyte solution, storing at 70°C for 5 minutes, comparing the percent of the binder polymer dissolved, and when the percent of the binder polymer dissolved is 10% or more, determining that the binder polymer dissolved in the electrolyte solution.

In this instance, the electrolyte solution used includes 1.0M of LiPF₆ in an organic solvent in which ethylene carbonate (EC) and ethylmethyl carbonate (EMC) are mixed at 3:7 (a volume ratio) with an addition of 0.5 wt% of vinylenecarbonate (VC) as an additive.

As a result of evaluating the solubility of PVdF-HFP as the first binder polymer used in Example 1, the percent of the first binder polymer dissolved was about 10 wt% based on the total weight of the first binder polymer, so it was determined that the first binder polymer dissolved in the electrolyte solution. On the other hand, as a result of evaluating the solubility, the percent of PVdF-TFE as the second binder polymer dissolved was less than 10 wt% of the total weight of the second binder polymer, so it was determined that the second binder polymer did not dissolve in the electrolyte solution.

### Observation of cross section of separator (analysis of groove size on surface of porous coating layer)

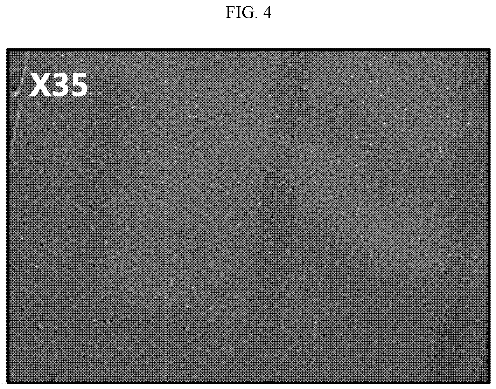

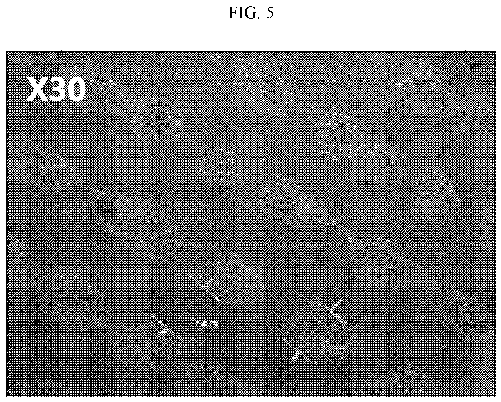

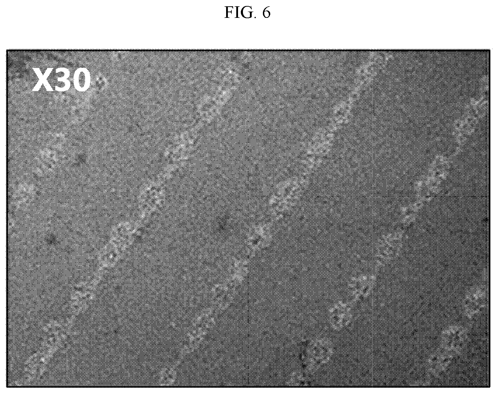

The cross sections of the separators prepared in examples were observed using Field Emission SEM (FE-SEM) (Hitachi S-4800 Scanning Electron Microscope). FIGs. 4 to 6 are SEM images showing surfaces (upper surfaces) of the separators prepared in Examples 1 to 3, respectively.

### Measurement of wet adhesive strength

For each of PVdF-HFP as the first binder polymer and PVdF-TFE as the second binder polymer in Example 1, wet adhesive strength was measured.

The separator (Preparation Example 1 to 4) prepared using only the first slurry prepared in Example 1 and the separator (Preparation Examples 5 and 6) prepared using only the second slurry prepared in Example 1 were interposed between the electrodes and placed in a pouch, and the electrolyte solution was injected and stored at room temperature for 24 hours. Subsequently, the pressure of 3 kgf/cm² was applied for 5 minutes at each measurement temperature specified in the following TABLE 1. The WET adhesive strength at the interface was measured by peeling the separator off from the electrode using UTM machine.

In the case of Preparation Examples 1 to 4, it was confirmed that the WET adhesive strength reduces since the first binder polymer dissolves in the electrolyte solution as the temperature rises. In contrast, in the case of Preparation Examples 5 and 6, it was confirmed that the wet adhesive strength is maintained since the second binder polymer does not dissolve in the electrolyte solution even though the temperature rises.

**[TABLE 1]**

| | Binder polymer | Measurement temperature (°C) | WET adhesive strength (gf/20mm) |
|---|---|---|---|
| Preparation Example 1 | PVDF-HFP | 45 | 22 |
| Preparation Example 2 | PVDF-HFP | 50 | 68 |
| Preparation Example 3 | PVDF-HFP | 60 | 7 |
| Preparation Example 4 | PVDF-HFP | 70 | 3 |
| Preparation Example 5 | PVdF-TFE | 60 | 62 |
| Preparation Example 6 | PVdF-TFE | 70 | 68 |

### Measurement of battery resistance

Each of the separators prepared in Example 1 and Comparative Example 3 was punched into a 18 Pi circular shape and wet with an electrolyte solution at 70°C for about 4 minutes to prepare a coin cell. In this instance, the electrolyte solution used was the same as the electrolyte solution used to prepare the secondary battery of Example 1.

Subsequently, resistance was measured using Electrochemical Impedance Spectroscopy (EIS).

It was confirmed that in the case of Example 1 having lithium ion paths due to the grooves in the surface of the porous coating layer, the resistance was lower than Comparative Example 3 having the porous coating layer formed by simply mixing 2 types of binders.

**[TABLE 2]**

| | Resistance value (Ω) |
|---|---|
| Example 1 | 0.72 |
| Comparative Example 3 | 0.80 |

## Claims

1. A separator, comprising:
a porous substrate having pores; and
a porous coating layer located on at least one surface of the porous substrate, the porous coating layer including inorganic particles and a binder polymer located on all or part of surfaces of the inorganic particles and connecting and holding the inorganic particles together,
wherein the binder polymer includes a first binder polymer and a second binder polymer,
wherein the first binder polymer is a polymer that dissolves in the electrolyte solution when it is wet with an electrolyte solution at 65 to 75°C for 3 to 5 minutes,
wherein the second binder polymer is a polymer that does not dissolve in the electrolyte solution when it is wet with the electrolyte solution at 65 to 75°C for 3 to 5 minutes,
wherein the porous coating layer includes a first porous coating layer zone and a second porous coating layer zone,
wherein at least part of the first porous coating layer zone is exposed to a surface region of the porous coating layer, and
wherein the first porous coating layer zone only includes the first binder polymer as the binder polymer, and the second porous coating layer zone only includes the second binder polymer as the binder polymer.

2. The separator according to claim 1, wherein the first porous coating layer zone includes two or more zones spaced apart from each other.

3. The separator according to claim 1, wherein at least part of the second porous coating layer zone is defined by the first porous coating layer zone.

4. The separator according to claim 1, wherein the first binder polymer includes poly(vinylidene fluoride-hexafluoropropylene) (PVdF-HFP), and
wherein the second binder polymer includes poly(vinylidenefluoride-tetrafluoroethylene) (PVdF-TFE).

5. The separator according to claim 1, wherein a weight average molecular weight of the first binder polymer is 300,000 to 600,000.

6. The separator according to claim 1, wherein a weight average molecular weight of the second binder polymer is 300,000 to 400,000.

7. The separator according to claim 1, wherein the first binder polymer is a PVdF-HFP copolymer having a substitution ratio of HFP of 5 to 20 wt%, and
wherein the second binder polymer is a PVdF-TFE copolymer having a substitution ratio of TFE of 15 to 25 wt%.

8. A secondary battery, comprising:
a positive electrode, a negative electrode and the separator according to any one of claims 1 to 7 between the positive electrode and the negative electrode.

9. The secondary battery according to claim 8, wherein the first porous coating layer zone has one or more grooves having a predetermined width and depth.

10. The secondary battery according to claim 9, wherein an area of the grooves is 20 to 30% of a total area of the surface of the porous coating layer based on the area occupied by the grooves on the surface of the porous coating layer.

11. The secondary battery according to claim 9, wherein a depth of the grooves is from 0.5 to 1 µm.

12. The secondary battery according to claim 9, wherein the grooves are arranged at regular or irregular intervals.

13. A method for manufacturing a secondary battery having lithium ion paths, the method comprising:
preparing a first slurry including inorganic particles, a first binder polymer and a solvent, and a second slurry including inorganic particles, a second binder polymer and a solvent;
coating the first slurry and the second slurry on at least one surface of a porous substrate having pores to prepare a separator having a porous coating layer, wherein the porous coating layer has a first porous coating layer zone only including the first binder polymer as the binder polymer and a second porous coating layer zone only including the second binder polymer as the binder polymer;
interposing the separator between a positive electrode and a negative electrode to prepare an electrode assembly, and placing the electrode assembly in an electrode case and injecting an electrolyte solution to prepare a preliminary secondary battery; and
placing the preliminary secondary battery between two jig plates and performing pressure and heat pre-treatment to apply heat of 65 to 75°C to the secondary battery for 3 to 5 minutes using the jig plates,
wherein at least part of the first binder polymer included in the first porous coating layer zone dissolves in the electrolyte solution to form one or more grooves having a predetermined width and depth in a surface of the porous coating layer during the pressure and heat pre-treatment.

14. The method for manufacturing the secondary battery having the lithium ion paths according to claim 13, wherein the coating of the first slurry and the second slurry on the at least one surface of the porous substrate comprises:
(1) coating the first slurry and the second slurry on the porous substrate in an alternating manner, or
(2) coating the second slurry on the porous substrate to a predetermined thickness, and coating the first slurry and the second slurry on the coated second slurry in an alternating manner, or
(3) coating the second slurry on the porous substrate to a predetermined thickness, and coating the first slurry on the coated second slurry with a gap therebetween into a predetermined shape.

15. The method for manufacturing the secondary battery having the lithium ion paths according to claim 13, wherein the first binder polymer includes poly(vinylidene fluoride-hexafluoropropylene) (PVdF-HFP), and
wherein the second binder polymer includes poly(vinylidenefluoride-tetrafluoroethylene) (PVdF-TFE).

16. The method for manufacturing the secondary battery having the lithium ion paths according to claim 13, wherein a weight average molecular weight of the first binder polymer is 300,000 to 600,000.

17. The method for manufacturing the secondary battery having the lithium ion paths according to claim 13, wherein a weight average molecular weight of the second binder polymer is 300,000 to 400,000.

18. The method for manufacturing the secondary battery having the lithium ion paths according to claim 13, wherein the first binder polymer is a PVdF-HFP copolymer having a substitution ratio of HFP of 5 to 20 wt%, and
wherein the second binder polymer is a PVdF-TFE copolymer having a substitution ratio of TFE of 15 to 25 wt%.

19. The method for manufacturing the secondary battery having the lithium ion paths according to claim 13, wherein an area of the grooves is 20 to 30% of a total area of the surface of the porous coating layer based on the area occupied by the grooves on the surface of the porous coating layer.

20. The method for manufacturing the secondary battery having the lithium ion paths according to claim 13, wherein a depth of the grooves is from 0.5 to 1 µm.
